# FASCICULE DE BREVET EUROPEEN

(11) **EP 3 194 190 B1**
(45) Date de publication et mention de la délivrance du brevet: **05.06.2019**
(21) Numéro de dépôt: 15753399.3
(22) Date de dépôt: 23.07.2015
(51) Int. Cl.: B60G 11/58

(54) **JAMBE DE FORCE COMPORTANT UN RESSORT PNEUMATIQUE DONT UN PISTON EST EN APPUI SUR L'EXTRÉMITÉ D'UN CORPS D'AMORTISSEUR**
STREBE MIT EINER LUFTFEDER, BEI DER EIN KOLBEN GEGEN DAS ENDE EINES STOSSDÄMPFERKÖRPERS WIRKT
STRUT COMPRISING A PNEUMATIC SPRING OF WHICH A PISTON BEARS AGAINST THE END OF A SHOCK ABSORBER BODY

(30) Priorité: 16.09.2014 FR 1458730
(43) Date de publication de la demande: 26.07.2017
(73) Titulaire: Renault S.A.S., 92100 Boulogne-Billancourt (FR)
(72) Inventeur: LAVILLUNIERE, Vincent, F-95220 Herblay (FR)
(86) Numéro de dépôt international: PCT/FR2015/052026
(87) Numéro de publication internationale: WO 2016/042220

(56) Documents cités:
- DE-B- 1 136 219
- US-A- 1 914 814
- US-A- 3 385 589
- US-A1- 2010 065 994

## Description

### DOMAINE TECHNIQUE DE L'INVENTION

L'invention concerne une jambe de force d'un ensemble de suspension de véhicule automobile.

### ARRIERE PLAN TECHNIQUE DE L'INVENTION

L'invention concerne plus particulièrement une jambe de force destinée à être interposé entre un châssis et un porte-fusée d'un véhicule automobile, la jambe de force comportant :
- un amortisseur comportant un corps cylindrique dans lequel une tige axiale est montée télescopique, une première extrémité libre étant destinée à être fixée au châssis et une deuxième extrémité étant destinée à être fixée au porte-fusée ;
- un ressort pneumatique comportant un cylindre pneumatique rigide coaxial à l'amortisseur qui délimite radialement une chambre de travail dans laquelle un piston est reçu coulissant, la chambre de travail étant traversée par la tige d'amortisseur, le cylindre pneumatique étant fixe par rapport à la tige d'amortisseur, et le piston étant fixé au corps d'amortisseur ;
- un ressort hélicoïdal coaxial à l'amortisseur qui est interposé axialement entre une face fixe par rapport à la tige d'amortisseur et une face fixe par rapport au corps d'amortisseur.

Dans un véhicule automobile léger, tel qu'un véhicule urbain, la suspension du véhicule est équipée de jambes de force présentant une raideur relativement faible car la masse suspendue du véhicule est faible. Ceci permet de garantir un certain confort d'utilisation pour les passagers du véhicule.

Des véhicules conçus pour voyager, telles que des berlines, présentent une masse suspendue plus importante que les véhicules urbains. La suspension sera donc équipée de jambes de force plus raides. Ces jambes de force plus raides permettent d'obtenir un confort optimal pour les passagers, que le véhicule circule "à vide" ou chargé.

Néanmoins, un véhicule léger, par exemple un véhicule urbain de petite taille, est susceptible d'embarquer autant de charge utile qu'une berline, c'est-à-dire cinq personnes avec bagages. En d'autres termes, la charge utile est la même pour un véhicule urbain que pour une berline.

Or, du fait de la relative souplesse des jambes de force d'un véhicule urbain, une même charge entraînera une baisse de la hauteur de caisse plus importante pour un véhicule léger que pour une berline.

On a récemment cherché à concevoir un véhicule urbain très léger est conçu pour avoir une masse suspendue particulièrement faible. Un tel véhicule requiert des jambes de force très souple. La souplesse des jambes de force peut devenir problématique lorsque le véhicule est chargé.

En outre, ce véhicule est conçu pour présenter un coefficient de trainée (Cx) faible. De ce fait, la place réservée pour les jambes de force est réduite, notamment dans une direction axiale.

De plus, la hauteur dudit véhicule est particulièrement basse. Ainsi, lorsque le véhicule est chargé, l'accès aux places peut devenir malaisé pour les passagers et la visibilité du conducteur urbaine devient insuffisante.

On a déjà proposé une suspension dite "semi-active" dans laquelle la jambe de force comporte un ressort hélicoïdal classique agencé en parallèle avec un ressort pneumatique entre l'ensemble de masses suspendues du véhicule et l'ensemble de masses non suspendues. Cet agencement permet de réguler la raideur du ressort pneumatique en pilotant la pression d'air dans le cylindre du ressort pneumatique.

Dans cet agencement selon l'état de la technique, le ressort pneumatique comporte un unique cylindre délimitant une chambre de travail dans laquelle un piston est monté coulissant. Le ressort hélicoïdal est agencé dans la chambre de travail.

Néanmoins, un tel agencement présente le défaut de laisser très peu de liberté de conception. Ainsi, les dimensions de la chambre de travail sont conditionnées par l'encombrement du ressort hélicoïdal.

En outre, la surface active du piston est très élevée, du fait du diamètre important du ressort hélicoïdal. De ce fait, la raideur du ressort pneumatique est trop élevée pour être utilisée dans un véhicule léger.

Le document US2010/0065994 montre un exemple de l'état de la technique.

### BREF RESUME DE L'INVENTION

Pour résoudre ces problèmes, l'invention propose une jambe de force du type décrit précédemment, caractérisé en ce que le piston est en appui axial contre l'extrémité axiale du corps d'amortisseur qui est traversée par la tige d'amortisseur.

Selon d'autres caractéristiques de l'invention :
- le piston est réalisé en une pièce avec un couvercle de fermeture du corps d'amortisseur ;
- le cylindre pneumatique est ajusté autour du corps d'amortisseur avec jeu annulaire radial, le cylindre pneumatique étant ainsi guidé en coulissement axial par une face cylindrique extérieure du corps d'amortisseur ;
- des anneaux de glissement sont interposés radialement dans un jeu radial réservé entre le cylindre pneumatique et le corps d'amortisseur ;
- le ressort pneumatique comporte une chambre secondaire déportée qui communique avec la chambre de travail ;
- la chambre secondaire est agencée autour de la chambre de travail, la chambre secondaire étant séparée radialement de la chambre de travail par le cylindre pneumatique ;
- la chambre de travail communique avec la chambre secondaire par l'intermédiaire d'au moins un évent agencé à l'extrémité du cylindre pneumatique ;
- la chambre secondaire est agencée à distance de la chambre de travail avec laquelle elle communique par l'intermédiaire d'une conduite ;
- la chambre de travail comporte un orifice de régulation de la pression d'air dans la chambre de travail qui est alimenté par une source commandée d'air comprimé ;
- le ressort hélicoïdal est agencé à l'extérieur de la chambre de travail ;
- le ressort hélicoïdal est agencé autour du corps d'amortisseur, axialement au droit de la chambre secondaire.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue en perspective qui représente une roue avant de véhicule automobile équipée d'une jambe de force réalisée selon les enseignements de l'invention ;
- la figure 2 est une vue en perspective à plus grande échelle qui représente la fixation d'une extrémité supérieure de la jambe de force de la figure 1 sur le châssis du véhicule automobile ;
- la figure 3 est une vue en coupe axiale qui représente la jambe de force de la figure 1 ;
- la figure 4 est une vue de côté qui représente schématiquement le véhicule de la figure 1.

### DESCRIPTION DETAILLEE DES FIGURES

Dans la suite de la description, des éléments présentant une structure identique ou des fonctions analogues seront désignés par des mêmes références.

Dans la suite de la description, on adoptera une orientation axiale dirigée de bas en haut selon l'axe de l'amortisseur, comme indiqué par la flèche "A" des figures. On adoptera aussi des orientations radiales dirigées orthogonalement à l'axe de l'amortisseur, depuis l'intérieur vers l'extérieur selon la proximité avec l'axe de l'amortisseur.

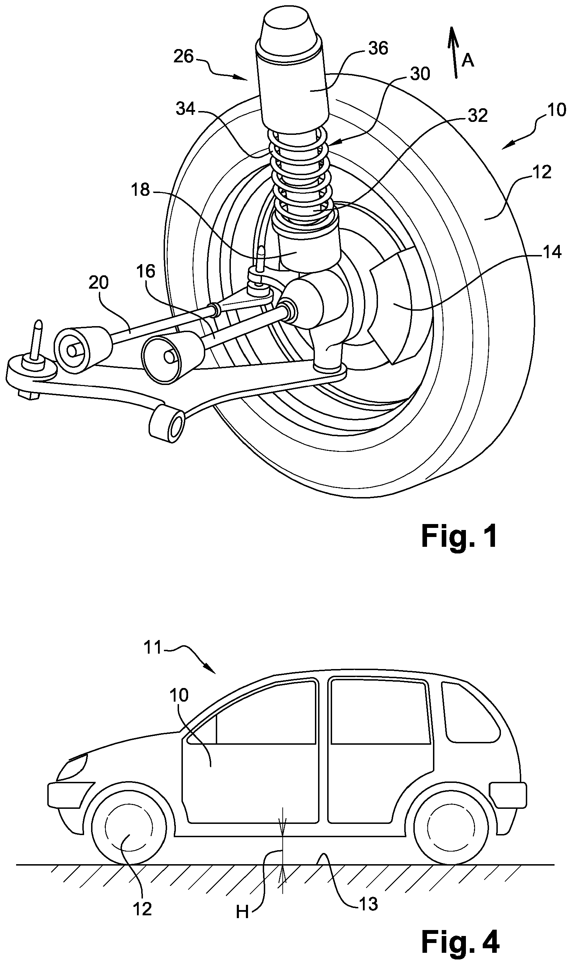

On a représenté à la figure 1 un ensemble 10 de masses non suspendues d'un véhicule automobile 11 comportant une roue 12 portée à rotation par un porte-fusée 18, un organe 14 de freinage et un arbre 16 de transmission d'entraînement de la roue 12. S'agissant ici d'une roue 12 directrice de véhicule automobile, une biellette 20 de direction est montée pivotante sur le porte-fusée 18 pour permettre de faire pivoter la roue 12 autour d'un axe vertical.

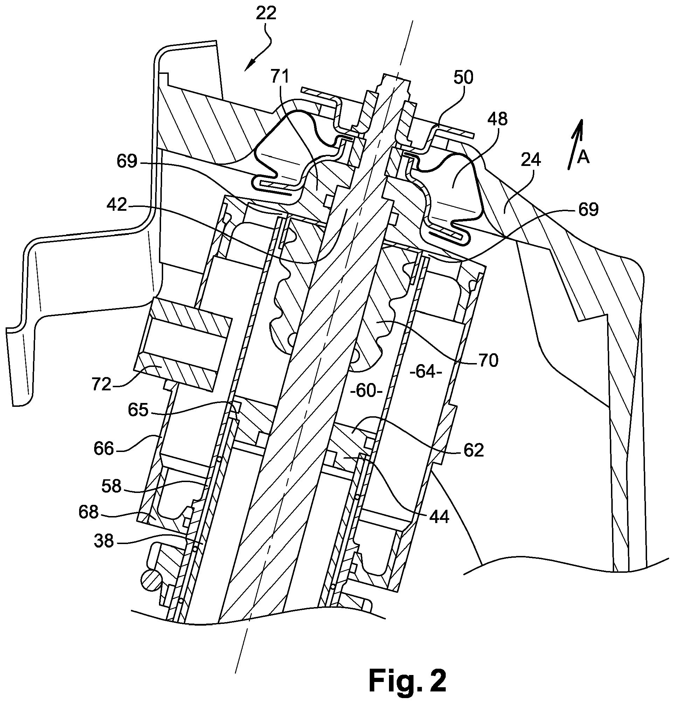

Cet ensemble 10 de masses non suspendues est relié à un ensemble 22 de masses suspendues du véhicule automobile. Comme représenté à la figure 2, l'ensemble 22 de masses suspendues comporte notamment un châssis 24.

La liaison entre l'ensemble 10 de masses non suspendues et l'ensemble 22 de masses suspendues est réalisé par une suspension 26. Dans l'exemple représenté à la figure 1, il s'agit d'une suspension 26 de type dit "pseudo MacPherson".

Une telle suspension 26 comporte un bras 28 inférieur de suspension, parfois appelé "triangle". Ce bras 28 est lié par une liaison rotule avec le porte-fusée 18 et en liaison pivot avec le châssis 24 du véhicule.

La suspension 26 comporte aussi une jambe 30 de force qui comporte un amortisseur 32, un premier ressort 34 hélicoïdal et un deuxième ressort 36 pneumatique.

Cette jambe 30 de force remplit deux fonctions complémentaires.

Comme représenté à la figure 4, elle permet de maintenir le bas de caisse de l'ensemble 10 de masses suspendues à une distance déterminée au-dessus du sol 13, appelée hauteur de caisse "H" ou encore "garde au sol".

Elle permet d'autre part de limiter l'amplitude des oscillations de l'ensemble 10 de masses suspendues lorsque le véhicule 11 roule et d'amortir ces mouvements d'oscillation afin de garantir un confort optimal pour les passagers du véhicule 11.

Le ressort 34 hélicoïdal et le ressort 36 pneumatique sont agencés en parallèle entre le châssis 24 du véhicule et le porte-fusée 18. Par conséquent, la raideur totale de la jambe 30 de force est obtenue en additionnant les raideurs respectives des deux ressorts 34, 36.

A titre d'exemple non limitatif, l'amortisseur 32 est ici formé par un amortisseur hydraulique télescopique traditionnellement utilisé dans les suspensions de véhicules automobiles.

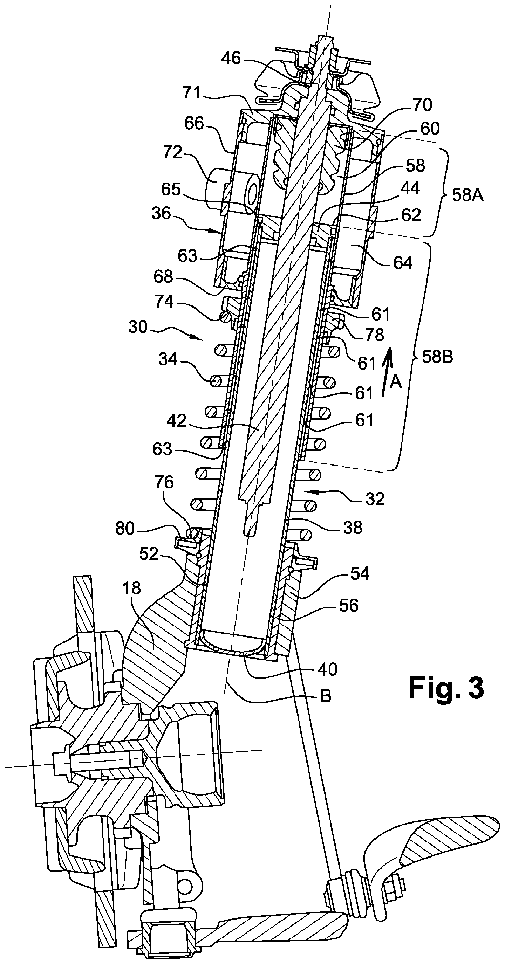

Comme représenté à la figure 3, l'amortisseur 32 comporte un corps 38 cylindrique d'axe principal "B" dont l'extrémité inférieure est fermée par un couvercle 40.

L'amortisseur 32 comporte aussi une tige 42 coaxiale à l'axe du corps 38 d'amortisseur. La tige 42 est montée télescopique dans le corps 38 d'amortisseur. Plus particulièrement, un tronçon d'extrémité inférieure de la tige 42 d'amortisseur est reçu coulissant axialement dans le corps 38 d'amortisseur à travers son extrémité supérieure.

Les organes d'amortissement situés à l'intérieur du corps d'amortisseur sont bien connus et ils n'ont pas été représentés aux figures. La tige 42 d'amortisseur est susceptible de coulisser selon une course axiale maximale déterminée.

L'extrémité supérieure du corps 38 d'amortisseur est fermée de manière étanche par un couvercle 44 supérieur annulaire dont un orifice central permet le passage de la tige 42 d'amortisseur.

Un tronçon d'extrémité 46 supérieure libre de l'amortisseur 32, ici formée par l'extrémité supérieure de la tige 42 d'amortisseur, est fixé au châssis 24 du véhicule, comme cela est représenté à la figure 2. Plus particulièrement, comme représenté à la figure 2, un bloc 48 filtrant et une butée 50 de rebond sont fixés l'un au-dessus de l'autre autour du tronçon d'extrémité 46 supérieur de la tige 42 d'amortisseur. Le tronçon d'extrémité 46 supérieur de la tige 42 d'amortisseur est reçu dans un orifice du châssis 24 de manière que le châssis 24 soit fixé par serrage axial entre la butée 50 de rebond et le bloc 48 filtrant.

Un deuxième tronçon d'extrémité 52 inférieure libre de l'amortisseur 32, ici formée par l'extrémité inférieure du corps 38 d'amortisseur, est fixé au porte-fusée 18, ici par une liaison encastrement. Le tronçon d'extrémité 52 inférieur du corps 38 d'amortisseur est reçu dans un collier 54 de serrage du porte-fusée 18. Un manchon 56 est intercalé radialement entre le corps 38 d'amortisseur et le collier 54 de serrage.

Le ressort 34 hélicoïdal et le ressort 36 pneumatique sont agencé sur l'amortisseur 32 de manière que la tige 42 d'amortisseur occupe une position de repos par rapport au corps 38 d'amortisseur, cette position de repos correspondant à une position d'équilibre stable de l'ensemble 22 de masses suspendues par rapport à l'ensemble 10 de masses non suspendues lorsque le véhicule n'est soumis à aucun effort dynamique.

Le ressort 36 pneumatique comporte un cylindre 58 pneumatique rigide coaxial à l'amortisseur 32. Le cylindre 58 pneumatique se présente sous la forme d'un manchon. Le cylindre 58 pneumatique délimite radialement une chambre 60 de travail dans laquelle un piston 62 est reçu coulissant axialement.

Le cylindre 58 pneumatique est fixé à la tige 42 d'amortisseur par des moyens qui seront décrits plus en détails par la suite, tandis que le piston 62 est fixé au corps 38 d'amortisseur.

La chambre 60 de travail est destinée à contenir un gaz, ici de l'air, comprimé à une pression nominale lorsque le piston 62 occupe une position de repos par rapport à la chambre 60 de travail. Le volume de la chambre 60 de travail est ainsi susceptible de varier en fonction du coulissement du piston 62. La position de repos du piston 62 correspond à la position de repos de l'amortisseur 32.

Une surface active du piston 62 agit ainsi sur de l'air comprimé enfermé dans une enceinte fermée. Lorsque le piston 62 coulisse axialement vers le haut, il comprime l'air qui oppose ainsi un effort élastique axial vers le bas tendant à rappeler le piston 62 vers sa position de repos.

Le piston 62 est en appui axial contre un bord 65 d'extrémité supérieur du cylindre 58 pneumatique. Le piston 62 est ici porté par le couvercle 44 supérieur de fermeture du corps 38 d'amortisseur. Plus particulièrement, le piston 62 est réalisé en une pièce avec le couvercle 44 de fermeture.

Le corps 38 d'amortisseur est reçu coulissant dans un tronçon 58B d'extrémité inférieur du cylindre 58 pneumatique. De plus, le cylindre 58 pneumatique est guidé en coulissement axial par la face cylindrique extérieure du corps 38 d'amortisseur.

A cet effet, le cylindre 58 pneumatique est ajusté autour du corps 38 d'amortisseur avec un jeu annulaire radial permettant le guidage en coulissement. En d'autres termes, le diamètre intérieur du cylindre 58 pneumatique est égal à la somme du diamètre extérieur du corps 38 d'amortisseur et du jeu annulaire radial fonctionnel de glissement réservé entre le corps 38 d'amortisseur et le cylindre 58 pneumatique.

Ainsi, lorsque la jambe 30 de force est au repos, un premier tronçon 58A supérieur de travail du cylindre 58 pneumatique délimite effectivement la chambre 60 de travail, tandis que le deuxième tronçon 58B inférieur de guidage du cylindre 58 pneumatique s'étend vers le bas autour du corps 38 d'amortisseur pour guider le coulissement du cylindre 58 pneumatique.

Ainsi, la chambre 60 de travail est ainsi agencée axialement au-dessus du corps 38 d'amortisseur et elle est traversée par la tige 42 d'amortisseur.

Le tronçon 58B de guidage du cylindre est sensiblement plus long que la course maximale de la tige 42 d'amortisseur pour permettre un guidage optimal du cylindre 58 pneumatique quel que soit la position de la tige 42 d'amortisseur par rapport au corps 38 d'amortisseur. Dans l'exemple représenté aux figures, lorsque la jambe 30 de force est au repos, la chambre 60 de travail occupe globalement le quart supérieur du cylindre 58 pneumatique, les trois-quarts inférieurs du cylindre 58 pneumatique étant utilisés pour son guidage en coulissement.

Pour favoriser le coulissement axial du cylindre 58 pneumatique par rapport au corps 58 pneumatique, des anneaux 61 de glissement sont interposés radialement entre le cylindre 58 pneumatique et le corps 38 d'amortisseur. Les anneaux 61 de glissement sont munis d'un revêtement favorisant le glissement, par exemple d'un revêtement de polytétrafluoroéthylène (PTFE).

Deux joints 63 d'étanchéité à l'air sont aussi interposés radialement entre le corps 38 d'amortisseur et le cylindre 58 pneumatique. Un premier joint 63 supérieur est agencé à proximité de l'extrémité supérieure du corps 58 d'amortisseur, tandis qu'un deuxième joint 63 inférieur est agencé à proximité de l'extrémité inférieure du cylindre 58 pneumatique. Les anneaux 61 de glissement sont agencés axialement entre les deux joints 63 d'étanchéité.

Les anneaux 61 de glissement et les joints 63 d'étanchéité sont ici fixés au corps 38 d'amortisseur.

En variante non représentée de l'invention, les anneaux de glissement et les joints d'étanchéité sont fixés au cylindre pneumatique.

Le piston 62 présente une surface radiale active, c'est-à-dire une surface en contact avec l'air comprimé de la chambre 60 de travail, qui présente sous forme d'un disque de diamètre globalement égal au diamètre du corps 38 d'amortisseur. De ce fait, le ressort 36 pneumatique est susceptible de présenter une raideur "k1" relativement faible par rapport à la jambe de force de l'état de la technique.

La raideur "k1" du ressort 36 pneumatique dépend notamment du volume d'air sur lequel le piston 62 agit. Or, l'encombrement axial de la jambe 30 de force est limité par des contraintes de conception du véhicule. Il n'est donc pas toujours possible de prolonger axialement vers le haut le cylindre 58 pneumatique pour augmenter le volume de la chambre 60 de travail.

Pour résoudre ce problème, la jambe 30 de force comporte une chambre 64 secondaire déportée qui communique librement avec la chambre 60 de travail. L'adverbe "librement" signifie que l'air est apte à circuler dans les deux sens sans restriction entre les deux chambres 60, 64. Ainsi, la pression d'air entre les deux chambres 60, 64 est équilibrée instantanément. L'enceinte d'air comprimé est ainsi constituée par la chambre 60 de travail et par la chambre 64 secondaire communicantes.

Contrairement à la chambre 60 de travail, la chambre 64 secondaire présente un volume constant. La quantité d'air enfermé dans ces deux chambres 60, 64 communicantes sera appelée par la suite "réserve d'air".

Grâce à cet agencement, la jambe 30 de force présente un encombrement axial réduit tout en bénéficiant d'une réserve d'air importante, et tout en présentant un piston 62 dont la surface active est assez petite pour que le ressort soit suffisamment souple.

La chambre 64 secondaire est délimitée radialement vers l'extérieur par une enveloppe 66 cylindrique coaxiale au cylindre 58 pneumatique et radialement vers l'intérieur par le cylindre 58 pneumatique. La chambre 64 secondaire est plus particulièrement agencée autour de la chambre 60 de travail. Les deux chambres 60, 64 sont ainsi séparées radialement uniquement par le tronçon 58A supérieur du cylindre 58 pneumatique.

L'enveloppe 66 présente un bord supérieur qui est agencé axialement sensiblement à la même hauteur que le bord supérieur du cylindre 58 pneumatique. Le bord inférieur de l'enveloppe 66 est agencé sensiblement à mi-hauteur du cylindre 58 pneumatique.

Ainsi, l'augmentation du volume d'air sur lequel agit le piston 62 se traduit par une augmentation de l'encombrement radial de la jambe 30 de force sans augmenter son encombrement axial.

La chambre 64 secondaire est fermée de manière étanche à l'air vers le bas par un joint 68 à lèvre qui est intercalé entre la face interne de l'enveloppe 66 et la face externe du cylindre 58 pneumatique.

La chambre 60 de travail et la chambre 64 secondaire sont fermées vers le haut, de manière étanche à l'air par rapport à l'extérieur, par un capot 71 radial commun. Le capot 71 est fixé à au tronçon 46 d'extrémité supérieur de la tige 42 d'amortisseur.

Le cylindre 58 pneumatique et l'enveloppe 66 sont chacun fixés au capot 71. Ainsi, le cylindre 58 pneumatique et l'enveloppe 66 sont chacun fixés à la tige 42 d'amortisseur par l'intermédiaire du capot 71.

Le capot 71 est agencé axialement juste au-dessous du bloc 48 filtrant de manière que le bloc 48 filtrant soit légèrement comprimé entre le capot 71 et le châssis 24 du véhicule.

Le ressort 36 pneumatique est muni d'évents 69 de communication entre la chambre 60 de travail et la chambre 64 secondaire.

Les évents 69 sont agencés à proximité du bord d'extrémité supérieur du cylindre 58 pneumatique pour garantir que le piston ne passera pas au-dessus du niveau des évents 69 lors de l'utilisation de la jambe 30 de force.

Les évents 69 sont ici formés dans le cylindre 58 pneumatique, par des échancrures qui sont réalisées dans le bord d'extrémité supérieur du cylindre 58 pneumatique.

En variante, les évents sont formés par des orifices réalisés à proximité de son bord d'extrémité supérieur.

En variante, les évents sont formés par des sillons réalisés dans le capot.

Selon une variante non représentée de l'invention, la chambre secondaire est agencée à distance de la chambre de travail avec laquelle elle communique par l'intermédiaire d'une conduite.

La chambre 60 de travail renferme aussi une butée 70 élastique dite "butée 70 de choc". Cette butée 70 de choc est fixée autour de la tige 42 d'amortisseur à proximité du capot 71. Elle est destinée à amortir le choc du piston 62 avec le capot 71 lorsque la jambe 30 de force subit un effort de compression axial très important.

La chambre 60 de travail communique aussi avec un orifice 72 de régulation de la pression nominale d'air dans la chambre de travail qui est alimenté par une source commandée d'air comprimé (non représentée). L'orifice 72 de régulation est ici agencé dans l'enveloppe 66 de la chambre 64 secondaire. Ceci permet de piloter la raideur "k1" du ressort 36 pneumatique pour l'adapter à la charge du véhicule en agissant sur la pression nominale d'air qui règne dans les chambres 60, 64.

Le ressort 34 hélicoïdal est agencé coaxialement au corps 38 d'amortisseur. Le ressort 34 hélicoïdal est monté précontraint entre une face 74 fixe par rapport à la tige 42 d'amortisseur et une face 76 fixe par rapport au corps 38 d'amortisseur.

Le ressort 34 hélicoïdal est plus particulièrement agencé axialement entre une coupelle 78 supérieure qui est fixée au cylindre 58 pneumatique, et une coupelle 80 inférieure qui est fixée au corps 38 d'amortisseur. La face 74 inférieure de la coupelle 78 supérieure forme ainsi la face fixe par rapport à la tige 42 d'amortisseur, tandis que la face 76 supérieure de la coupelle 80 inférieure forme la face fixe par rapport au corps 38 d'amortisseur.

Le ressort 34 hélicoïdal est ici agencé à l'extérieur de la chambre 60 de travail. Le ressort 34 hélicoïdal est plus particulièrement agencé autour du corps 38 d'amortisseur et autour du tronçon 58B inférieur de guidage du cylindre 58 pneumatique, axialement sous la chambre 64 secondaire. La coupelle 78 supérieur est plus particulièrement agencée juste au-dessous de l'enveloppe 66, tandis que la coupelle 80 inférieure est agencée axialement contre le collier 54 de serrage du porte-fusée 18.

En position de repos, l'extrémité inférieure du cylindre 58 pneumatique est écartée axialement de la coupelle 80 inférieure d'une distance qui est supérieure ou égale à la hauteur axiale de la chambre 60 de travail pour assurer que le cylindre 58 pneumatique ne vienne jamais an contact avec la coupelle 80 inférieure.

Avantageusement, la précontrainte du ressort 34 hélicoïdal est réglé par vissage ou dévissage de la coupelle 78 supérieure sur un tronçon fileté (non représenté) du cylindre 58 pneumatique.

Lorsque la roue 12 directrice pivote, le porte-fusée 18 entraîne le corps 38 d'amortisseur dans son pivotement, tandis que le ressort 34 hélicoïdal demeure fixe. Pour empêcher l'usure du ressort 34 hélicoïdal par frottement avec la coupelle 80 inférieure, cette coupelle 80 est montée rotative autour de l'axe "B" de l'amortisseur par rapport au corps 38 d'amortisseur.

Lorsqu'un effort de compression est appliqué à la jambe 30 de force, la tige 42 d'amortisseur coulisse axialement vers le porte-fusée 18 par rapport au corps 38 d'amortisseur.

Ce coulissement entraîne un coulissement du piston 52 tendant à faire diminuer le volume de la chambre 60 de travail, et donc de l'enceinte fermée. L'air ainsi comprimé applique au piston 62, et donc au corps 38 d'amortisseur, un effort élastique de rappel qui tend à rappeler le piston 62 vers sa position de repos.

Parallèlement, le coulissement de la tige 42 comprime axialement le ressort 34 hélicoïdal. En réaction, le ressort 34 hélicoïdal applique un effort élastique qui tend à rappeler l'amortisseur 32 vers sa position de repos.

De manière connue, la fréquence propre de la jambe 30 de force est égale à l'équation [(k1 + k2)/m]^{1/2} dans laquelle :
- k1 est la raideur du ressort 36 pneumatique ;
- k2 est la raideur du ressort 34 hélicoïdal ;
- m est la valeur de la masse suspendue.

La raideur de chaque ressorts 34, 36 est déterminée pour que les oscillations de l'ensemble 22 de masses suspendues présentent une amplitude maximale déterminée pour un chargement normal du véhicule et dans des conditions normales de roulage, par exemple pour la présence de deux personnes à bord, et pour des efforts dynamiques normaux appliqués à l'ensemble 22 de masses suspendues, lorsque le véhicule roule sur une route goudronnée.

De manière connue, le ressort 36 pneumatique présente une raideur "k1" qui n'est pas linéaire, c'est-à-dire que la valeur de la raideur "k1" augmente lorsque le piston 62 coulisse pour comprimer l'air contenu dans l'enceinte fermée. Il en résulte qu'il n'est pas nécessaire de commander une augmentation de pression dans l'enceinte fermée du ressort 36 pneumatique lorsque les efforts dynamique exercés sur le véhicule deviennent plus importants car l'amplitude du coulissement de l'amortisseur 32 sera naturellement limitée par l'augmentation de raideur "k1" du ressort 36 pneumatique.

Cependant, la jambe 30 de force doit présenter une certaine souplesse pour que le confort des passagers soit optimal, c'est-à-dire que la raideur "k1, k2" des ressort 34, 36 doit être relativement faible. Or lorsque le véhicule est particulièrement chargé, cette souplesse entraîne une baisse sensible de la hauteur "H" de caisse du véhicule.

Cette baisse de hauteur "H" de caisse peut devenir problématique si elle est trop importante, par exemple lorsque le véhicule embarque cinq passagers avec bagages. Il se peut alors que le piston 62 vienne cogner contre la butée 70 de choc en conditions normales de roulage. Outre le fait que de tels chocs à répétition sont désagréables pour les passagers, ils risquent de détériorer la jambe 30 de force.

Pour maintenir la hauteur "H" de caisse à une valeur déterminée quelle que soit la charge du véhicule, la pression d'air comprimé dans les chambres 60, 64 est commandée de manière à augmenter en fonction de la charge. L'air comprimé à la pression commandée est ainsi injecté via l'orifice 72 de régulation.

La régulation de la pression d'air dans les chambres 60, 64 du ressort 36 pneumatique est par exemple commandée automatiquement par une unité électronique de commande en fonction de la hauteur "H" de caisse mesurée par un capteur adapté.

Par ailleurs la jambe 30 de force réalisée selon les enseignements de l'invention permet aussi de faire varier la hauteur "H" de caisse à volonté en fonction des différentes conditions d'utilisation du véhicule. Cette variation de la hauteur "H" de caisse est commandée automatiquement par l'unité électronique de commande en fonction de paramètres d'utilisation du véhicule en faisant varier de manière adaptée la pression d'air dans les chambres 60, 64 du ressort 36 pneumatique.

Ainsi, lorsque le véhicule 11 est en stationnement, et que les portes ou le coffre sont ouverts, la hauteur "H" de caisse est commandée vers une valeur de chargement, par exemple égale à 170 mm, pour faciliter le chargement d'objets dans le coffre, ou pour faciliter la montée ou la descente des passagers. Cette fonction est particulièrement utile lorsque le véhicule présente une hauteur de caisse trop faible pour permettre de monter aisément dans le véhicule.

Lorsque le véhicule roule à une vitesse inférieure à une vitesse de seuil, par exemple 70 km/h, on considère que le véhicule roule en ville. La hauteur "H" de caisse est alors commandée vers une valeur de roulage urbain, par exemple 145 mm; qui est inférieure à la valeur de chargement. Cette fonction permet au conducteur de bénéficier d'une visibilité optimale en avant du véhicule tout en conférant au véhicule des performances aérodynamiques plus performantes qu'en condition de chargement.

Lorsque le véhicule roule à une vitesse supérieure à une vitesse de seuil, par exemple 70 km/h, on propose d'améliorer les performances aérodynamiques du véhicule en abaissant la hauteur "H" de caisse par rapport à un roulage urbain. La hauteur "H" de caisse est alors commandée vers une valeur de roulage extra urbain, par exemple 120 mm, qui est inférieure à la valeur de roulage urbain.

Enfin, pour des raisons esthétiques, lorsque le véhicule est en stationnement, sans passagers, moteur éteint, frein de parking actionné et fermé à clé, la hauteur "H" de caisse est alors commandée vers une valeur dite "d'exposition", par exemple 130 mm.

L'invention a été décrite en application à une suspension du type "pseudo MacPherson". En variante, la jambe 30 de force est applicable à d'autres types de suspension de véhicule automobile.

## Revendications

1. Jambe (30) de force destinée à être interposé entre un châssis (24) et un porte-fusée (18) d'un véhicule (11) automobile, la jambe (30) de force comportant :
- un amortisseur (32) comportant un corps (38) cylindrique dans lequel une tige (42) axiale est montée télescopique, une première extrémité (46) libre étant destinée à être fixée au châssis et une deuxième extrémité (52) étant destinée à être fixée au porte-fusée (18) ;
- un ressort (36) pneumatique comportant un cylindre (58) pneumatique rigide coaxial à l'amortisseur (32) qui délimite radialement une chambre (60) de travail dans laquelle un piston (62) est reçu coulissant, la chambre (60) de travail étant traversée par la tige (42) d'amortisseur, le cylindre (58) pneumatique étant fixe par rapport à la tige (42) d'amortisseur, et le piston (62) étant fixé au corps (38) d'amortisseur ;
- un ressort (34) hélicoïdal coaxial à l'amortisseur (32) qui est interposé axialement entre une face (74) fixe par rapport à la tige (42) d'amortisseur et une face (76) fixe par rapport au corps (38) d'amortisseur ;
**caractérisée en ce que** le piston (62) est en appui axial contre l'extrémité axiale du corps (38) d'amortisseur qui est traversée par la tige (42) d'amortisseur.

2. Jambe (30) de force selon la revendication précédente, **caractérisée en ce que** le piston (62) est réalisé en une pièce avec un couvercle (44) de fermeture du corps (38) d'amortisseur.

3. Jambe (30) de force selon la revendication précédente, **caractérisée en ce que** le cylindre (58) pneumatique est ajusté autour du corps (38) d'amortisseur avec jeu annulaire radial, le cylindre (58) pneumatique étant ainsi guidé en coulissement axial par une face cylindrique extérieure du corps (38) d'amortisseur.

4. Jambe (30) de force selon la revendication précédente, **caractérisée en ce que** des anneaux (60) de glissement sont interposés radialement dans un jeu radial réservé entre le cylindre (58) pneumatique et le corps (38) d'amortisseur.

5. Jambe (30) de force selon l'une quelconque des revendications précédentes, **caractérisée en ce que** le ressort (36) pneumatique comporte une chambre (64) secondaire déportée qui communique avec la chambre (60) de travail.

6. Jambe (30) de force selon la revendication précédente, **caractérisée en ce que** la chambre (64) secondaire est agencée autour de la chambre (60) de travail, la chambre (64) secondaire étant séparée radialement de la chambre (60) de travail par le cylindre (58) pneumatique.

7. Jambe (30) de force selon la revendication précédente, **caractérisée en ce que** la chambre (60) de travail communique avec la chambre (64) secondaire par l'intermédiaire d'au moins un évent (70) agencé à l'extrémité du cylindre (58) pneumatique.

8. Jambe (30) de force selon la revendication 6, **caractérisée en ce que** la chambre (64) secondaire est agencée à distance de la chambre (60) de travail avec laquelle elle communique par l'intermédiaire d'une conduite.

9. Jambe (30) de force selon l'une quelconque des revendications précédentes, **caractérisée en ce que** la chambre (60) de travail comporte un orifice (72) de régulation de la pression d'air dans la chambre (60) de travail qui est alimenté par une source commandée d'air comprimé.

10. Jambe (30) de force selon l'une quelconque des revendications précédentes, **caractérisée en ce que** le ressort (34) hélicoïdal est agencé à l'extérieur de la chambre (60) de travail.

11. Jambe (30) de force selon la revendication précédente, **caractérisée en ce que** le ressort (34) hélicoïdal est agencé autour du corps (38) d'amortisseur, axialement au droit de la chambre (64) secondaire.

## Patentansprüche

1. Federbein (30), das dazu bestimmt ist, zwischen ein Fahrgestell (24) und einen Achsschenkelträger (18) eines Kraftfahrzeugs (11) eingefügt zu werden, wobei das Federbein (30) aufweist:
- einen Stoßdämpfer (32), der einen zylindrischen Körper (38) aufweist, in den eine axiale Stange (42) teleskopisch montiert ist, wobei ein erstes freies Ende (46) dazu bestimmt ist, am Fahrgestell befestigt zu werden, und ein zweites Ende (52) dazu bestimmt ist, am Achsschenkelträger (18) befestigt zu werden;
- eine Luftfeder (36), die einen steifen Druckluftzylinder (58) koaxial zum Stoßdämpfer (32) aufweist, der radial eine Arbeitskammer (60) begrenzt, in der ein Kolben (62) gleitend aufgenommen wird, wobei die Arbeitskammer (60) von der Stoßdämpferstange (42) durchquert wird, wobei der Druckluftzylinder (58) bezüglich der Stoßdämpferstange (42) ortsfest ist, und der Kolben (62) am Stoßdämpferkörper (38) befestigt ist;
- eine Schraubenfeder (34) koaxial zum Stoßdämpfer (32), die axial zwischen einer bezüglich der Stoßdämpferstange (42) ortsfesten Seite (74) und einer bezüglich des Stoßdämpferkörpers (38) ortsfesten Seite (76) eingefügt ist;
**dadurch gekennzeichnet, dass** der Kolben (62) axial gegen das axiale Ende des Stoßdämpferkörpers (38) anliegt, das von der Stoßdämpferstange (42) durchquert wird.

2. Federbein (30) nach dem vorhergehenden Anspruch, **dadurch gekennzeichnet, dass** der Kolben (62) aus einem Stück mit einem Verschlussdeckel (44) des Stoßdämpferkörpers (38) hergestellt wird.

3. Federbein (30) nach dem vorhergehenden Anspruch, **dadurch gekennzeichnet, dass** der Druckluftzylinder (58) um den Stoßdämpferkörper (38) herum mit radialem ringförmigem Spielraum angepasst wird, wobei der Druckluftzylinder (58) so von einer zylindrischen Außenseite des Stoßdämpferkörpers (38) axial gleitend geführt wird.

4. Federbein (30) nach dem vorhergehenden Anspruch, **dadurch gekennzeichnet, dass** Gleitringe (60) radial in einen radialen Spielraum eingefügt sind, der zwischen dem Druckluftzylinder (58) und dem Stoßdämpferkörper (38) ausgespart ist.

5. Federbein (30) nach einem der vorhergehenden Ansprüche, **dadurch gekennzeichnet, dass** die Luftfeder (36) eine versetzte Sekundärkammer (64) aufweist, die mit der Arbeitskammer (60) in Verbindung steht.

6. Federbein (30) nach dem vorhergehenden Anspruch, **dadurch gekennzeichnet, dass** die Sekundärkammer (64) um die Arbeitskammer (60) herum angeordnet ist, wobei die Sekundärkammer (64) durch den Druckluftzylinder (58) radial radial von der Arbeitskammer (60) getrennt ist.

7. Federbein (30) nach dem vorhergehenden Anspruch, **dadurch gekennzeichnet, dass** die Arbeitskammer (60) mit der Sekundärkammer (64) über mindestens ein Entlüftungsloch (70) in Verbindung steht, das am Ende des Druckluftzylinders (58) angeordnet ist.

8. Federbein (30) nach Anspruch 6, **dadurch gekennzeichnet, dass** die Sekundärkammer (64) in Abstand zur Arbeitskammer (60) angeordnet ist, mit der sie über eine Leitung in Verbindung steht.

9. Federbein (30) nach einem der vorhergehenden Ansprüche, **dadurch gekennzeichnet, dass** die Arbeitskammer (60) eine Öffnung (72) zur Regelung des Luftdrucks in der Arbeitskammer (60) aufweist, die von einer gesteuerten Druckluftquelle gespeist wird.

10. Federbein (30) nach einem der vorhergehenden Ansprüche, **dadurch gekennzeichnet, dass** die Schraubenfeder (34) außerhalb der Arbeitskammer (60) angeordnet ist.

11. Federbein (30) nach dem vorhergehenden Anspruch, **dadurch gekennzeichnet, dass** die Schraubenfeder (34) um den Stoßdämpferkörper (38) herum axial gegenüber der Sekundärkammer (64) angeordnet ist.

## Claims

1. Strut (30) intended to be interposed between a chassis (24) and a stub axle (18) of a motor vehicle (11), the strut (30) comprising:
- a shock absorber (32) comprising a cylindrical body (38) in which an axial rod (42) is mounted telescopically, a first free end (46) being intended to be fixed to the chassis and a second end (52) being intended to be fixed to the stub axle (18);
- a pneumatic spring (36) comprising a rigid pneumatic cylinder (58) coaxial to the shock absorber (32), which radially delimits a working chamber (60) in which a piston (62) is slidingly housed, the shock absorber rod (42) passing through the working chamber (60), the pneumatic cylinder (58) being fixed relative to the shock absorber rod (42) and the piston (62) being fixed to the shock absorber body (38);
- a helical spring (34) coaxial to the shock absorber (32) and interposed axially between a face (74) fixed relative to the shock absorber rod (42) and a face (76) fixed relative to the shock absorber body (38);
**characterized in that** the piston (62) bears axially against the axial end of the shock absorber body (38) through which the shock absorber rod (42) passes.

2. Strut (30) according to the preceding claim, **characterized in that** the piston (62) is made of one piece with a cover (44) for closing the shock absorber body (38).

3. Strut (30) according to the preceding claim, **characterized in that** the pneumatic cylinder (58) is adjusted around the shock absorber body (38) with radial annular play, the pneumatic cylinder (58) being thus guided while sliding axially on an outer cylindrical face of the shock absorber body (38) .

4. Strut (30) according to the preceding claim, **characterized in that** sliding rings (60) are radially interposed in a radial play reserved between the pneumatic cylinder (58) and the shock absorber body (38).

5. Strut (30) according to any of the preceding claims, **characterized in that** the pneumatic spring (36) comprises a remote secondary chamber (64) which communicates with the working chamber (60).

6. Strut (30) according to the preceding claim, **characterized in that** the secondary chamber (64) is arranged around the working chamber (60), the secondary chamber (64) being separated radially from the working chamber (60) by the pneumatic cylinder (58).

7. Strut (30) according to the preceding claim, **characterized in that** the working chamber (60) communicates with the secondary chamber (64) via at least one vent (70) arranged at the end of the pneumatic cylinder (58).

8. Strut (30) according to Claim 6, **characterized in that** the secondary chamber (64) is arranged at a distance from the working chamber (60) with which it communicates via a conduit.

9. Strut (30) according to any of the preceding claims, **characterized in that** the working chamber (60) comprises an orifice (72) for regulating the air pressure in the working chamber (60) which is supplied by a controlled source of compressed air.

10. Strut (30) according to any of the preceding claims, **characterized in that** the helical spring (34) is arranged outside the working chamber (60).

11. Strut (30) according to the preceding claim, **characterized in that** the helical spring (34) is arranged around the shock absorber body (38), axially at the level of the secondary chamber (64) .
